# EUROPÄISCHE PATENTANMELDUNG

(11) **EP 1 953 272 A1**
(43) Veröffentlichungstag der Anmeldung: **06.08.2008**
(21) Anmeldenummer: 08001080.4
(22) Anmeldetag: 22.01.2008
(51) Int. Cl.: C25B 15/08, C25B 1/46

(54) **Verfahren zur elektrochemischen Entchlorung von Anolytsole aus der NaCI-Elektrolyse**

(30) Priorität: 03.02.2007 DE 102007005541
(71) Anmelder: Bayer MaterialScience AG, 51368 Leverkusen (DE)
(72) Erfinder: Bulan, Andreas, 40764 Langenfeld (DE); Weber, Rainer, Dr., 51519 Odenthal (DE)

(57) **Zusammenfassung**

Es wird ein Verfahren zur reduktiven Nachbehandlung von NaCl-haltigen Lösungen erhältlich aus der Anodenseite einer Nacl-Elektrolyse beschrieben, bei dem die reduzierbaren Komponenten in der NaCl-haltigen Lösung kathodisch elektrochemisch reduziert werden.

## Beschreibung

Die vorliegende Erfindung beschreibt ein Verfahren zur Entfernung von Chlor aus einer einer NaCl-haltigen Lösung, die aus der Anodenhalbzelle einer NaCl-Elektrolyse-Zelle stammt. Das in der NaCl-haltigen Lösung enthaltene Chlor wird hierbei einer elektrochemischen Behandlung an einer negativ polarisierten Elektrode unterzogen.

Üblicherweise werden z.B. zur Elektrolyse von Natriumchlorid-haltigen Lösungen Membranelektrolyseverfahren eingesetzt (siehe hierzu Peter Schmittinger, CHLORINE, Wiley-VCH Verlag, 2000). Hierbei wird eine zweigeteilte Elektrolysezelle eingesetzt, die aus einem Anodenraum mit einer Anode und einem Kathodenraum mit einer Kathode besteht. Anoden- und Kathodenraum werden von einer Ionenaustauschermembran getrennt. In den Anodenraum wird eine Natriumchlorid-haltige Lösung, nachfolgend Sole genannt, mit einer Natriumchlorid-Konzentration von üblicherweise ca. 300 g/l eingeführt. An der Anode wird das Chlorid-Ion zu Chlor oxidiert, das mit der abgereicherten Natriumchlorid-haltigen Lösung (ca. 200 g/l) aus der Zelle geführt wird.

Damit das Natriumchlorid, das in der abgereicherten NaCl-haltigen Lösung aus der Zelle gelangt, nicht verworfen werden muss, wird diese Lösung wieder mit festem Natriumchlorid aufkonzentriert. Dabei gelangen Verunreinigungen, wie Calcium-, Eisen-, Aluminium- oder Magnesiumverbindungen oder Sulfate aus dem zugesetzten Natriumchlorid in die Sole, so dass eine Reinigung erfolgen muss. Üblicherweise wird versucht z.B. die Eisen- und Aluminiumverunreinigungen durch Fällung und anschließende Filtration zu entfernen. Die Calcium-, Magnesiumionen werden üblicherweise durch Ionenaustauscherharze entfernt. Zum Schutz der Fällung- / Filtrationsapparaturen und Ionenaustauscherharze vor Chlor und Chlorverbindungen, Hypochloriten und Chloraten müssen diese starken Oxidationsmittel entfernt werden. Hierzu wird die Chlor- / Hypochloritkonzentration der chlorhaltige Anolytsole zuerst durch pH-Erniedrigung und dann beispielsweise durch Strippung mit Wasserdampf erniedrigt. Es kann so ein Chlorgehalt von weniger als 100 ppm in der NaCl-haltigen Lösung erreicht werden. Um das restliche verbleibende Chlor, das im Hydrolysegleichgewicht mit Hypochlorit steht ebenfalls noch zu entfernen, wird üblicherweise eine chemische Reduktion, z.B. mit Natriumbisulfit durchgeführt. Hiernach wird die NaCl-Lösung mit festem Natriumchlorid aufkonzentriert, der Fällung/Filtration zugeführt und mittels Ionenaustauscherharzen von Calcium- und Magnesium-Ionen befreit und erneut dem Anodenteil der Elektrolysezelle zugeführt.

Nachteil des Einsatzes von Natrium-Bisulfit und ähnlichen schwefelhaltigen Verbindungen zur chemischen Entchlorung ist, dass als Reaktionsprodukt der chemischen Reduktion mit Bisulfit oder schwefelhaltigen Verbindungen Sulfat in der NaCl-Lösung entsteht. Das Sulfat kann jedoch nicht elektrochemisch abgebaut werden, so dass es sich in der NaCl-haltigen Lösung allmählich anreichert. Moderne Hochleistungsionenaustauschermembranen werden jedoch durch höhere Konzentrationen von Sulfaten geschädigt. Eine zu hohe Konzentration von Sulfat in der Sole bewirkt die Bildung von Sauerstoff an der Anode und verringert die Stromausbeute, wodurch die Wirtschaftlichkeit des Elektrolyseverfahrens beeinträchtigt wird. Eine Schädigung des Coatings der Anode ist ebenfalls möglich. Die Hersteller geben daher maximale Grenzwerte für die Sulfatkonzentration in der NaCl-Lösung an. Bedingt durch Führung der Sole im Kreislauf muss zur Vermeidung der Schädigung von Anodencoating und Membran usw., ein Teil der NaCl-Lösung ausgeschleust und verworfen werden. Hierdurch entstehen hohe Verluste an Natriumchlorid, die sich negativ auf die Wirtschaftlichkeit und die Umweltverträglichkeit des Elektrolyseverfahrens auswirken.

Zur Vermeidung bzw. Reduzierung des Ausschleusens von Sole kann z.B. das Verfahren.der Nanofiltration oder das DSR-Verfahren, ein chromatographisches Verfahren mit amphoteren Harzen, eingesetzt werden, mit denen Sulfat aus der Sole entfernt werden kann (siehe hierzu WINNACKER KÜCHLER, Chemische Technik Prozesse und Produkte, 5. Auflage, Band 3 Anorganische Grundstoffe, Zwischenprodukte, 2005, Seite 438 ff). Nachteil dieser Verfahren ist, dass die Sulfat-Bildung nicht vermieden wird, sondern ein zusätzlicher Verfahrensschritt notwendig wird, um Sulfat aus der Sole zu entfernen.

Es bestand daher die Aufgabe, ein Nachbehandlungsverfahren für NaCl-Lösungen zur Verfügung zu stellen, dass die genannten Nachteile nicht aufweist, und mit deutlich weniger oder sogar ohne den Zusatz von schwefelhaltigen Reduktionsmitteln auskommt.

Es wurde gefunden, dass auf die Entfernung von Chlor durch Ansäuerung und/oder Strippung mit Dampf, anschließender chemischer Reduktion des Chlors in der Anolytsole mit schwefelhaltigen Verbindungen vollständig oder größtenteils verzichtet werden kann, wenn die Anolytsole einer elektrochemischen Entchlorung unterzogen wird.

Gegenstand der Erfindung ist ein Verfahren zur reduktiven Nachbehandlung von NaCl-haltigen Lösungen erhältlich aus der Anodenseite einer NaCl-Elektrolyse, dadurch gekennzeichnet, dass die reduzierbaren Komponenten in der NaCl-haltigen Lösung kathodisch elektrochemisch reduziert werden.

Die NaCl-haltige Lösung, die gemäß dem vorliegenden erfindungsgemäßen Verfahrens behandelt wird, kann insbesondere aus der NaCl-Elektrolyse mittels Membranverfahren, einer NaCl-Elektrolyse mittels Membranverfahren bei der auf der Kathodenseite eine Gasdiffusionselektrode eingesetzt wird oder aus einem Diaphragmaverfahren stammen.

Durch dass erfindungsgemäße Verfahren kann gelöstes Chlor, noch vorhandenes Hypochlorit, Chlorat und andere reduzierbare Verbindungen wie z.B. Stickstofftrichlorid entfernt werden, ohne dass Reaktionsprodukte in die NaCl-haltige Lösungen gelangen, wodurch deutlich geringere Mengen der NaCl-haltigen Lösung aufgearbeitet oder ausgeschleust und verworfen werden müssen. Die Wirtschaftlichkeit und Umweltverträglichkeit der gemäß dem erfindungsgemäßen Verfahren durchgeführten NaCl-Elektrolyse wird deutlich verbessert.

Bevorzugt ist eine Ausführungsform des neuen Verfahrens, bei der die NaCl-haltige Lösung vor oder nach der elektrochemischen Reduktion zusätzlich durch chemische Reduktion mittels Wasserstoffperoxid, insbesondere wässrige Wasserstoffperoxidlösung behandelt wird.

In der aus der Anodenkammer gelangenden chlorhaltigen Anolytsole sind neben Chlor unter anderem auch Hypochlorit und Chlorat vorhanden. An einer Kathode werden diese Verbindungen bzw. Ionen unter kathodischem Potenzial reduziert, beispielsweise gemäß folgenden Reaktionsgleichungen:
Kathode:

2 Cl₂ + 2e⁻ → 2 Cl⁻

2 OCl⁻ + 4 H⁺ + 2e⁻ → Cl₂ + 2 H₂O

2 ClO₃ + 6 H⁺ + 4e⁻ → Cl₂ + 3 H₂O

An der Gegenelektrode, der Anode der Zelle, kann beispielsweise Chlor aus einer Natriumchlorid-haltigen Lösung erzeugt werden. Ebenfalls ist denkbar, dass an der Anode Sauerstoff entwickelt oder Eisen-II-chlorid zu Eisen-III-chlorid oxidiert wird.

Die Elektrodenräume können beispielsweise durch eine handelsübliche Ionenaustauschermembran z.B. solche des Typs DUPONT NX 982 oder 324 der Firma Dupont de Nemours, getrennt werden. Hierdurch werden die Vermischung von Anolyten und Katholyten und den darin enthaltenen Komponenten sowie die Vermischung der gebildeten Gase an den jeweiligen Elektroden vermieden.

Wird zur Trennung der Elektrodenräume beispielsweise ein Diaphragma eingesetzt, so sollten die Elektrodenräume inertisiert werden, um die Bildung von explosionsfähigen Gemischen wie z.B. Mischungen aus Chlor und Wasserstoff zu vermeiden.

Wasserstoff kann in Membran- oder Diaphragmaverfahren bei der kathodischen Reaktion bei hohen Stromdichten oder bei zu langen Verweilzeiten des Elektrolyten in der Kathodenkammer bei galvanostatischer Betriebsweise der Zelle gebildet werden. Galvanostatische Betriebsweise bedeutet, dass eine bestimme Stromstärke eingestellt wird, und diese durch Anpassung der Spannung aufrechterhalten wird. Bei der galvanostatischen Betriebsweise wird die Elektrolyse bei konstanter Stromstärke durchgeführt, wobei die Zellspannung entsprechend angepasst wird. Hierbei kann bei zu langer Verweilzeit des Elektrolyten in der Zelle die Nebenreaktion der Wasserelektrolyse stattfinden, bei der an der Kathode Wasserstoff gebildet wird. Um dies zu vermeiden, kann die Kathodenoberfläche vergrößert werden, z.B. durch Einsatz von dreidimensionalen Kathoden. Eine dreidimensionale Kathode besteht z.B. aus einer GraphitSchüttung oder aus Kohlenstoff-Vliesen.

Die Elektrolysezelle kann aber ebenso potenziostatisch, d.h. bei konstantem Potenzial, entsprechend einer konstanten Zellspannung betrieben werden. Die Betriebsweise bei konstantem Potenzial hat den Vorteil, dass bei ausreichend niedrig gewähltem Potenzial, die oben genannten Verbindungen reduziert werden können, ohne das Wasserstoff gebildet werden kann. Nachteil ist, dass die Stromdichten dabei nicht sehr hoch gewählt werden können, so dass eine hohe Verweilzeit notwendig und / oder eine große Anodenoberfläche zur Verfügung gestellt werden sollte.

Wird an der Anode Chlor aus einer Natriumchlorid-haltigen Lösung hergestellt, kann das Chlor in die bereits bestehenden Stoffkreisläufe der NaCl-Elektrolyse zugeführt werden.

Ebenfalls könnte anodisch Sauerstoff entwickelt und weiter verwertet werden.

Im Falle, dass als Anolyt eine Sole eingesetzt und Chlor erzeugt wird und dass dabei die Elektrolysezelle mit einem Diaphragma ausgerüstet ist, sollte vorzugsweise der Druck in der Kathodenkammer höher sein als der in der Anodenkammer, damit der Katholyt in die Anodenkammer gelangt und nicht chlorhaltiger Anolyt in die Kathodenkammer. Im umgekehrten Falle würde Chlor-haltiger Anolyt in den Katholyt gedrückt, dies wäre unerwünscht, da Chlor aus dem Katholyten entfernt werden soll.

Als Anodenwerkstoff wird beispielsweise der Standardwerkstoff für Anoden der NaCl-Etektrolyse eingesetzt, wie Titan, das mit einer Edelmetall- bzw. Edelmetalloxid-haltigen Beschichtung ausgerüstet ist. Dieses Material könnte ebenfalls als Kathodenwerkstoff eingesetzt werden. Prinzipiell können gegen Chlor und Natriumchlorid-haltige Lösungen beständige Werkstoffe eingesetzt werden. Unter Edelmetallen werden hier insbesondere Metalle aus der Reihe Osmium, Iridium, Platin, Ruthenium, Rhodium und Palladium verstanden.

Als Kathodenwerkstoff kann ebenfalls Kohle, graphitisierte Kohle oder Graphit eingesetzt werden. Verschiedene Elektrodenformen sind hieraus herstellbar.

Der pH-Wert des Elektrolyten kann insbesondere bevorzugt so gewählt werden, dass bei ausreichender Werkstoffbeständigkeit das Chlor zum Großteil als Hypochlorit vorliegt. Dies kann vorzugsweise bei einem pH-Wert größer als 7 erfolgen. Es ist jedoch ebenfalls denkbar, dass der pH-Wert kleiner als 7 beträgt, so dass weniger Chlor als Hypochlorit gelöst vorliegt.

Da jede pH-Einstellung einen zusätzlichen Aufwand darstellt, wird bevorzugt der Chlor-haltige Anolyt unbehandelt aus der Anodenkammer der NaCl-Elektrolyse direkt in die Kathodenkammer zur elektrochemischen Chlor-Reduktion eingeleitet.

Da sehr geringe Konzentrationen an Verbindungen wie Chlor, Hypochlorit, Chlorat oder Stickstofftrichlorid reduziert werden müssen, ist es vorteilhaft, die lokale Stromdichte an der Kathode sehr gering zu wählen. Hierzu können Elektroden als Kathode eingesetzt werden, die eine große Oberfläche aufweisen. Unter Kathoden mit großer Oberfläche sind solche zu verstehen, bei denen die innere Oberfläche größer ist als die äußere, geometrische Oberfläche, bevorzugt mindestens doppelt so groß.

Beispielsweise können Metallelektroden mit Schaumstruktur, z.B. aus Titanschwamm, Titan-Sinterelektroden, oder kugelförmige Metalle, Graphit oder schaumähnliches Graphit, edelmetallbeschichtetes Graphit sowie Kohlenstoffgewebe, -tücher und -vliese eingesetzt werden.

Metallelektroden können bevorzugt mit Edelmetall-, Edelmetalloxiden oder Edelmetallverbindungen oder deren Mischungen gecoatet sein, Graphite können ebenfalls bevorzugt Edelmetalle, Edelmetallverbindungen oder deren Mischungen enthalten.

Die Verweilzeit der NaCl-haltigen Lösung ist so einstellen, dass insbesondere möglichst alle reduzierbaren Verbindungen reduziert werden können, ohne dass die Reduktion von Wasser gemäß

2 H₂O + 2 e⁻ → H₂ + 2 OH⁻

einsetzt.

Die Verweilzeit im Kathodenraum beträgt insbesondere von 1 bis 30 min, bevorzugt 1 bis 10 min.

Die Stromdichte, berechnet auf die echte Oberfläche, beträgt bevorzugt 5 bis 100 A/m². Die einzubringende Ladungsmenge bei einem Chlorgehalt der Anolytsole von 100 mg/l beträgt von 0,05 bis 0,5 Ah/l Anolytsole. Deutlich höhere Ladungsmengen werden dann benötigt, wenn als Parallelreaktion die Wasserstoffentwicklung erlaubt wird.

Eine weitere alternative bevorzugte Ausführung des neuen Verfahrens ist die zusätzliche Behandlung von NaCl-haltiger Lösung aus der Anodenkammer einer NaCl-Elektrolyse durch Zugabe von Wasserstoffperoxid. Vorteil der Zugabe von Wasserstoffperoxid gegenüber der Zugabe von beispielsweise Natriumsulfit oder Natriumbisulfit ist, dass sich kein Sulfat in der NaCl-haltigen Lösung bei der chemischen Reduktion bildet, sondern lediglich Wasser. Bei der Anwendung dieses Verfahrens wird in einer der NaCl-Elektrolyse nachgeschalteten elektrochemischen Zelle in der Kathodenkammer nicht umgesetztes Chlor, Chlorat oder Hypochlorit und/oder ggf. überschüssiges Wasserstoffperoxid reduziert. Die zugesetzte Menge an Wasserstoffperoxid sollte dabei möglichst dem Redox-Equivalent der zu reduzierenden Verbindungen entsprechen. Dabei kann sowohl ein Unterschuss, beispielsweise von 0,95 Anteile dem Redox-Equivalent entsprechend als auch ein Überschuss von bis zu 1,2 dem Redox-Equivalent entsprechend eingesetzt werden. Vorteilhafterweise wird ein Unterschuss eingesetzt.

Hierbei wird beispielsweise das Wasserstoffperoxid dem chlorhaltigen Anolyten mittels einer Pumpe zudosiert, die Vermischung kann beispielsweise mittels eines Statikmischers in einer Rohrleitung erfolgen. Anschließend kann die so behandelte Lösung elektrochemisch reduziert werden. Hierbei wird dann vorzugsweise überschüssiges Wasserstoffperoxid reduziert, ebenso wie noch vorhandene andere reduzierbare Verbindungen.

Eine ebenfalls denkbare bevorzugte Ausführungsform des erfindungsgemäßen Verfahrens besteht darin, nur den Großteil, d. h. mindestens 80 %, bevorzugt mindestens 90 %, besonders bevorzugt mindestens 95 %, des vorhandenen Chlors erst elektrochemisch zu reduzieren, und dann den Rest von Chlor, Chlorat und Hypochlorit z.B. mittels konventioneller chemischer Reduktion durch Zugabe von beispielsweise Natriumsulfit oder Wasserstoffperoxid zu behandeln. Hierdurch kann die Purge-Menge an Sole gegenüber dem Stand der Technik ebenfalls deutlich reduziert werden.

### Beispiele

Die in den nachstehenden Beispielen eingesetzte Elektrolysezelle zur Reduktion von Chlor, Chlorat und Hypochlorit besteht aus einem Anodenraum mit einer Anode und einem Kathodenraum mit einer Kathode, die aus einer Schüttung aus Graphit und einem Stromverteiler gebildet wird. Der Werkstoff der Anode im Anodenraum und des Stromverteilers im Kathodenraum besteht aus einem mit Edelmetall-Oxid beschichteten Titan-Streckmetall, einem so genannten Standard DSA^{®}-Coating der Fa. Denora. Das Volumen des Anoden- bzw. Kathodenraumes mit Anode bzw. Stromverteiler beträgt 230 ml.
Der Elektrolyt wurde sowohl in den Anoden- als auch in den Kathodenraum von unten eingeführt und oben wieder entnommen.
Anodenraum und Kathodenraum wird durch eine handelübliche Ionenaustauschermembran der Firma Dupont de Nemours: Typ DUPONT 324 oder Typ Nafion 982 getrennt. Die Membranfläche beträgt 100 cm².
In den Anodenraum wurde eine NaCl-haltige Lösung mit einer NaCl-Konzentration von 204 g/l bei einem Volumenstrom von 1,0 l/h eingeleitet.
In den Kathodenraum wurde die zu behandelnde Sole eingeführt, wie sie üblicherweise aus der Anodenraum einer NaCl-Elektrolyse entnommen werden kann. Die Zusammensetzung war wie folgt: Der NaCl-Gehalt betrug ca. 200 g/l, der pH-Wert ca. 4, der Gehalt an Chlor ca. 400-450 mg/l.
Im Kathodenraum wurde an der Kathode, bestehend aus einer Graphitschüttung aus Graphitkugeln mit einem mittleren Durchmesser von 2 mm, bei den gezeigten Beispielen kein Wasserstoff entwickelt, dies wurde mit einer Messung überwacht.

### Beispiel 1

In der oben beschriebenen Zelle, ausgerüstet mit einer Ionenaustauschermembran vom Typ Nafion 982 der Firma Dupont de Nemours wurde mit einem Volumenstrom von 1,0 l/h die chlorhaltige von NaCl abgereicherte Anolytsole aus der NaCl-Elektrolyse mit einem Chlor-Gehalt von 422 mg/l in den Kathodenraum geleitet. Der Kathodenraum war mit Graphit-Kugeln gefüllt, wobei das Restvolumen des Kathodenraumes nach Abzug des Volumens der Graphitkugeln 160 ml betrug. Die Verweilzeit der zu behandelnden Sole im Kathodenraum betrug 5,6min. Die Spannung betrug 1,72 V, die Stromstärke 0,8 A. Die Konzentration des Chlors im Auslauf des Kathodenraumes betrug ca. 39 mg/l. Der pH-Wert der Anolytsole betrug pH 4. Es wurden 0,48 Ah/l Sole an Ladung eingebracht. Die Stromdichte bezogen auf die Summe der Oberfläche der eingesetzten Graphitkugeln betrug 8,5 A/m².

### Beispiel 2

In der oben beschriebenen Zelle, ausgerüstet mit einer Ionenaustauschermembran vom Typ Nafion 324 der Firma Dupont de Nemours, wurde mit 1,0 l/h die chlorhaltige Anolytsole einer anderen NaCl-Elektrolyse mit einem entsprechenden Chlor-Gehalt von 1522 mg/l und einem pH-Wert von 10 eingeleitet. Der Kathodenraum war mit Graphit-Kugeln gefüllt, wobei das Restvolumen des Kathodenraumes nach Abzug des Volumens der Graphitkugeln nur 95 ml betrug. Die Verweilzeit der zu reduzierenden NaCl-Sole betrug 5,7 min. Die Spannung der Zelle betrug 2,33 V, die Stromstärke 1,5 A. Die Konzentration des Chlors im Auslauf des Kathodenraums betrug ca. 113 mg/l. Die Stromdichte bezogen auf die Summe der Oberfläche der eingesetzten Graphitkugeln betrug 9,7 A/m².

### Beispiel 3

In der oben beschriebenen Zelle, ausgerüstet mit einer Ionenaustauschermembran vom Typ DUPONT Nafion 982, wurde mit 1,1 l/h die chlorhaltige Anolytsole einer NaCl-Elektrolyse mit einem entsprechenden Chlor-Gehalt von 422 mg/l und einem pH-Wert von 4 eingeleitet. Der Kathodenraum war mit Graphit-Kugeln gefüllt, wobei das Restvolumen des Kathodenraumes nach Abzug des Volumens der Graphitkugeln 95 ml betrug. Die Verweilzeit der zu reduzierenden Sole im Kathodenraum betrug 5,3 min. Die Spannung der Zelle betrug 1,72 V, die Stromstärke 0,8 A. Die Konzentration des Chlors im Auslauf des Kathodenraums betrug weniger als 1 mg/l. Die Stromdichte bezogen auf die Summe der Oberfläche der eingesetzten Graphitkugeln betrug 5,2 A/m².

## Patentansprüche

1. Verfahren zur reduktiven Nachbehandlung von NaCl-haltigen Lösungen erhältlich aus der Anodenseite einer NaCl-Elektrolyse, **dadurch gekennzeichnet, dass** die reduzierbaren Komponenten in der NaCl-haltigen Lösung kathodisch elektrochemisch reduziert werden.

2. Verfahren nach Anspruch 1, **dadurch gekennzeichnet, dass** die NaCl-haltige Lösung vor oder nach der elektrochemischen Reduktion zusätzlich durch chemische Reduktion mittels Wasserstoffperoxid, insbesondere wässrige Wasserstoffperoxidlösung behandelt wird.

3. Verfahren nach Anspruch 2, **dadurch gekennzeichnet, dass** die reduktive Nachbehandlung mittels Wasserstoffperoxid vor der elektrochemischen Reduktion stattfindet.

4. Verfahren nach einem der Ansprüche 1 bis 3, **dadurch gekennzeichnet, dass** die elektrochemische Reduktion nach dem Membranverfahren oder dem Diaphragmaverfahren, bevorzugt nach dem Membranverfahren erfolgt.

5. Verfahren nach einem der Ansprüche 1 bis 4, **dadurch gekennzeichnet, dass** die elektrochemische Reduktion in der Kathodenseite galvanostatisch oder potenziostatisch, bevorzugt galvanostatisch betrieben wird.

6. Verfahren nach wenigstens einem der Ansprüche 1 bis 5, **dadurch gekennzeichnet, dass** die in der elektrochemischen Reduktion verwendete Kathode und Anode unabhängig voneinander auf einem Material ausgewählt aus der Reihe: Kohle, graphitisierte Kohle, Graphit oder auf Titan basiert, das mit einem Edelmetall oder einem Edelmetalloxid beschichtet ist, basiert.

7. Verfahren nach wenigstens einem der Ansprüche 1 bis 6, **dadurch gekennzeichnet, dass** bei der elektrochemischen Reduktion auf der Anodenseite Chlor oder Sauerstoff erzeugt oder Eisen(II)- zu Eisen(III)chlorid oxidiert wird.

8. Verfahren nach wenigstens einem der Ansprüche 1 bis 5, **dadurch gekennzeichnet, dass** in der elektrochemischen Reduktion eine Kathode verwendet wird, bei der die innere Oberfläche größer ist als die äußere, geometrische Oberfläche, bevorzugt mindestens doppelt so groß.

9. Verfahren nach wenigstens einem der Ansprüche 1 bis 8, **dadurch gekennzeichnet, dass** die Verweilzeit der NaCl-Lösung im Kathodenraum der elektrochemischen Reduktionszelle 1 bis 30, bevorzugt 1 bis 10 Minuten, beträgt.

10. Verfahren nach wenigstens einem der Ansprüche 1 bis 9, **dadurch gekennzeichnet, dass** die Stromdichte bei der elektrochemischen Reduktion 5 bis 100 A/m² beträgt und/oder dass die einzubringende Ladungsmenge bezogen auf einen Chlorgehalt der Anolytsole von 100 mg/l von 0,05 bis 0,5 Ah/l beträgt.

11. Verfahren nach wenigstens einem der Ansprüche 1 bis 10, **dadurch gekennzeichnet, dass** die elektrochemische Reduktion und ggf. zusätzliche Reduktion mittels Wasserstoffperoxid bis zu einem Restgehalt an zu reduzierenden Verbindungen von 80 %, bevorzugt mindestens 90 %, besonders bevorzugt mindestens 95 %, geführt wird und die verbliebenen Reste an zu reduzierenden Verbindungen mittels chemischer Reduktion durch Zugabe von schwefelhaltigen Reduktionsmitteln, insbesondere Natriumsulfit oder Natriumbisulfit, entfernt werden.
